# EUROPÄISCHE PATENTSCHRIFT

(11) **EP 2 261 725 B1**
(45) Veröffentlichungstag und Bekanntmachung des Hinweises auf die Patenterteilung: **18.09.2013**
(21) Anmeldenummer: 10005794.2
(22) Anmeldetag: 04.06.2010
(51) Int. Cl.: G02B 27/22, G02B 23/02, G02B 13/06

(54) **Optische Anordnung zur Abbildung von in unterschiedlichen Blickrichtungen befindlichen Objekten**
Optical system for illustrating different visual angles of objects
Dispositif optique destiné à la représentation d'objets se trouvant à différents angles de vue

(30) Priorität: 09.06.2009 DE 102009024884
(43) Veröffentlichungstag der Anmeldung: 15.12.2010
(73) Patentinhaber: Astrium GmbH, 82024 Taufkirchen (DE)
(72) Erfinder: Gulde, Stephan, Dr., 81669 München (DE); Holota, Wolfgang, Dr., 83646 Bad Tölz (DE)
(74) Vertreter: Avenhaus, Beate

(56) Entgegenhaltungen:
- WO-A1-2008/108840
- US-A- 3 055 265
- US-A1- 2005 275 940

## Beschreibung

### TECHNISCHES GEBIET

Die vorliegende Erfindung betrifft eine optische Anordnung zur Abbildung von in unterschiedlichen Blickrichtungen befindlichen Objekten.

In vielen Anwendungsbereichen ist es erwünscht, unterschiedliche Objekte, die in unterschiedlichen Raumrichtungen oder Blickrichtungen liegen können, gleichzeitig beobachten oder detektieren zu können. Eine solche gleichzeitige Beobachtung oder Detektierung von räumlich getrennten Objekten, bei der man auch von "Parallelisierung" spricht, gestattet es, in einer Bildebene nur die auf die Objekte gerichteten Blickwinkelbereiche darzustellen und zwischen den Objekten gelegene "uninteressante" Raumbereiche auszublenden.

### STAND DER TECHNIK

Bekannt ist es, für eine derartige parallele Beobachtung in unterschiedliche Raumrichtungen oder Blickrichtungen eine Mehrzahl von Optiken zu verwenden, die jeweils einer bestimmten Blickrichtung zugeordnet sind. Ein Beispiel dafür sind die MOMS-Kameras, die im Raumlabor Spacelab und in der Raumstation Mir als Stereokameras eingesetzt wurden. Nachteilig bei derartigen Lösungen ist es, dass durch das Vorsehen von zwei oder mehr Optiken der Zusammenbau und die Ausrichtung und Kalibrierung der gesamten optischen Anordnung zeitlich aufwendig und technisch schwierig sind. Zudem ist eine derartige optische Anordnung aufgrund der Mehrzahl der vorgesehenen Optiken nicht sehr kompakt.

Die US 2005/0275 940 A1 offenbart ein optisches Abbildungssystem mit einer Vielzahl von parallel zueinander angeordneten Subteleskopen, denen eine Sammellinse nachgeordnet ist, die die von den einzelnen Subteleskopen eingefangenen Bilder in einer gemeinsamen Bildebene eines gemeinsamen Sensors abbildet. Diese bekannte optische Anordnung weist eine Mehrzahl von jeweils einer der Blickrichtungen zugeordneten Abbildungsoptiken auf.

Die WO 2008/108840 A1 offenbart ein optisches Abbildungssystem eines Teleskops mit einer Vielzahl von nebeneinander angeordneten Subteleskopen, denen eine komplexe Spiegelanordnung mit einem optischen Abbildungssystem nachgeordnet ist, welche die von den einzelnen Subteleskopen eingefangenen Bildern zusammenführt und auf einer Bildebene eines gemeinsamen Sensors abbildet.

Die US-A-3 055 265 offenbart eine Filmkamera zur Anfertigung von Weitwinkelaufnahmen oder Panoramaaufnahmen. Diese Filmkamera besitzt eine Optik, in der die Strahlengänge mehrerer Blickrichtungen erfasst werden und nebeneinander bzw. übereinander angeordnet das in der Kamera vorhandene Filmmaterial belichten. Diese optische Einrichtung enthält eine Mehrzahl von Objektiven, denen jeweils eine Spiegelumlenkvorrichtung zugeordnet ist. Jedes dieser einzelnen Objektive erzeugt auf einer Brennebene jeweils ein Bild, gesehen in Blickrichtung der jeweiligen vorgesetzten Spiegeloptik. In der Brennebene ist eine Linsenanordnung von einer der Anzahl der Blickrichtungen entsprechenden Linsenanzahl vorgesehen, von denen jede Linsenanordnung die jeweiligen Strahlengänge zu einer allen Strahlengängen gemeinsamen Sammellinse (Kollimator) und von dort zu einem gemeinsamen Objektiv leitet.

### DARSTELLUNG DER ERFINDUNG

Aufgabe der vorliegenden Erfindung ist es daher, eine gattungsgemäße optische Anordnung zu schaffen, die weniger komplex und damit kostengünstiger, sowie robuster bezüglich Alignment bzw. Dejustage ist.

Diese Aufgabe wird durch die im Patentanspruch 1 angegebene optische Anordnung gelöst.

Erfindungsgemäß ist diese optische Anordnung versehen mit einer Abbildungsoptik, die entlang einer optischen Achse angeordnete abbildende Elemente aufweist, mit einer Eintrittspupille und einer Austrittspupille, einer im Bereich der Eintrittsapertur und/oder der Austrittsapertur angeordneten Mehrfach-Pupillenblende und zumindest einer vor der Eintrittsapertur angeordneten Strahlenumlenkvorrichtung, die einer der von der MehrFach-Pupillenblende gebildeten Pupillen zugeordnet ist wobei die abbildenden Elemente der einen Abbildungsoptik die Strahlengänge oder Pupillen erfassen. Diese optische Anordnung zeichnet sich dadurch aus, dass hinter der Austrittsapertur zumindest eine weitere Abbildungsoptik vorgesehen ist, die einer der von der Mehrfach-Pupillenblende gebildeten Pupillen zugeordnet ist.

Durch diese erfindungsgemäße Ausgestaltung der optischen Anordnung ist es möglich, unterschiedliche Blickrichtungen zu parallelisieren und mit nur einer einzigen Abbildungsoptik auf eine Bildebene oder einen für die gewünschte Beobachtung oder Detektierung geeigneten Sensor zu projizieren. Die Vorteile einer solchen erfindungsgemäßen Parallelisierung im Vergleich zu der herkömmlichen Parallelisierung durch separate Optiken liegt in ersten Linie darin, dass bei der optischen Anordnung gemäß der Erfindung nur eine einzige Abbildungsoptik verwendet wird, sodass der Zusammenbau und die Ausrichtung sowie die Kalibrierung eines mit der erfindungsgemäßen optischen Anordnung versehenen Instruments weniger zeitaufwendig und technisch einfacher sind, und das resultierende Instrument intrinsisch stabil gegen Dejustage ist. Dadurch reduzieren sich die Kosten und das Risiko von Fehlfunktionen wird ebenfalls herabgesetzt. Außerdem lässt sich eine derartige optische Anordnung wesentlich kompakter aufbauen, sodass sowohl das Volumen als auch die Masse eines mit dieser erfindungsgemäßen optischen Anordnung versehenen Instruments gegenüber dem Stand der Technik reduziert sind. Die zusätzliche weitere Abbildungsoptik gestattet es, für die entsprechende Pupille eine unabhängige Abbildung des dieser Pupille zugeordneten Objekts in einer eigenständigen Bildebene vorzunehmen.

### VORTEILE

Vorzugsweise ist jeder der von der Mehrfach-Pupillenblende gebildeten Pupillen eine Strahlenumlenkvorrichtung zugeordnet. Dadurch können alle Pupillen in unterschiedlichen Richtungen "sehen". Es ist aber auch möglich, eine der Pupillen nicht mit einer Strahlenumlenkvorrichtung zu versehen, sodass durch diese Pupille parallel zur optischen Achse "geradeaus gesehen" werden kann.

Vorteilhaft ist es, wenn die jeweilige Strahlenumlenkvorrichtung zumindest einen Spiegel aufweist.

Dabei ist es besonders von Vorteil, wenn eine der Anzahl der Pupillen entsprechende Anzahl von weiteren Abbildungsoptiken vorgesehen ist, wobei jede der weiteren Abbildungsoptiken einer der Pupillen zugeordnet ist. Bei dieser Ausführungsform kann somit für jede der Pupillen unabhängig voneinander eine separate Abbildung des entsprechenden Objekts erfolgen.

Es kann auch von Vorteil sein, wenn die Abbildungsoptik derart ausgestaltet ist, dass die von der Mehrfach-Pupillenblende erzeugten Bilder, vorzugsweise separat voneinander, fokussierbar sind. Dadurch können beispielsweise die einzelnen Pupillen zugeordneten Objekte an unterschiedlichen Orten hinter der Abbildungs Abbildungs-Abbildung der einzelnen Objekte auf unterschiedlichen Sensoren vorgenommen werden soll.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: ein grundlegendes Beispiel des Strahlengangs einer optischen Anordnung zur Abbildung von einem Objekt, das nicht in Richtung der optischen Achse der Abbildungsoptik gelegen ist;
- Fig. 2: die zu der optischen Anordnung aus Fig. 1 gehörende Eintrittspupille;
- Fig. 3: Eine erste andere optische Anordnung in schematischer Darstellung des Strahlengangs;
- Fig. 4: Die Anordnung der Eintrittspupillen in der optischen Anordnung aus Fig. 3;
- Fig. 5: Die Darstellung der Eintrittspupillen in einer anderen Ausgestaltung der optischen Anordnung und
- Fig. 6: Eine schematische Darstellung des Strahlengangs in einer ersten Ausführungsform der erfindungsgemäßen optischen Anordnung.
- Fig. 7: Eine schematische Darstellung des Strahlengangs in einer anderen Ausführungsform der erfindungsgemäßen optischen Anordnung.

### DARSTELLUNG VON BEVORZUGTEN AUSFÜHRUNGSBEISPIELEN

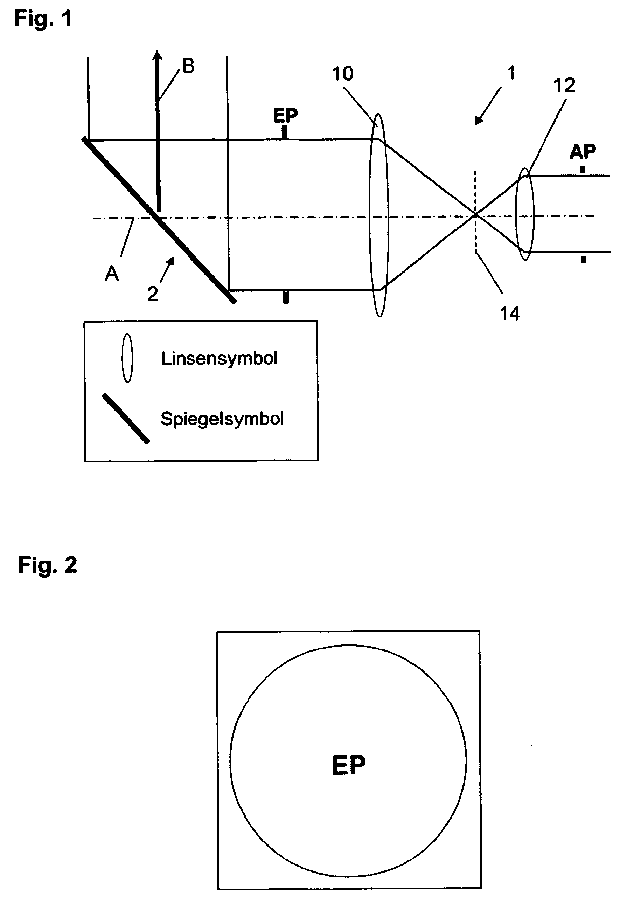

Fig. 1 zeigt das Grundprinzip einer optischen Anordnung, bei der die Blickrichtung B nicht in Richtung der optischen Achse A liegt. Diese optische Anordnung weist eine Abbildungsoptik 1 sowie eine Strahlenumlenkvorrichtung 2 auf. Die Abbildungsoptik 1 weist entlang der optischen Achse A angeordnete abbildende Elemente 10, 12 auf, die hier durch zwei Linsensymbole dargestellt sind. Die Erfindung ist aber nicht auf einer Abbildungsoptik mit Linsen beschränkt, sondern bezieht sich auf eine beliebige Optik. Sie kann somit aus beliebig vielen unterschiedlichen abbildenden Elementen bestehen. Die abbildenden Elemente können beispielsweise refraktive Linsen oder auch Spiegellinsen sein. In gezeigtem Beispiel stellt die dargestellte Abbildungsoptik ein afokales Teleskop mit einer Zwischenbildebene 14 dar. Die Blickrichtung B der Abbildungsoptik 1 ist der Richtung des eintretenden Lichts entgegengesetzt.

Die in Fig. 1 dargestellte konventionelle optische Anordnung besitzt nur eine einzige Apertur und damit eine einzelne Eintrittspupille EP sowie eine einzige Austrittspupille AP. Der Blick auf die Eintrittspupille EP aus der Richtung des in das Objektiv eintretenden Lichts (also entgegen dem Pfeil B) ist in Fig. 2 dargestellt. In diesem gezeigten Beispiel ist die einzige Eintrittspupille EP rund ausgebildet.

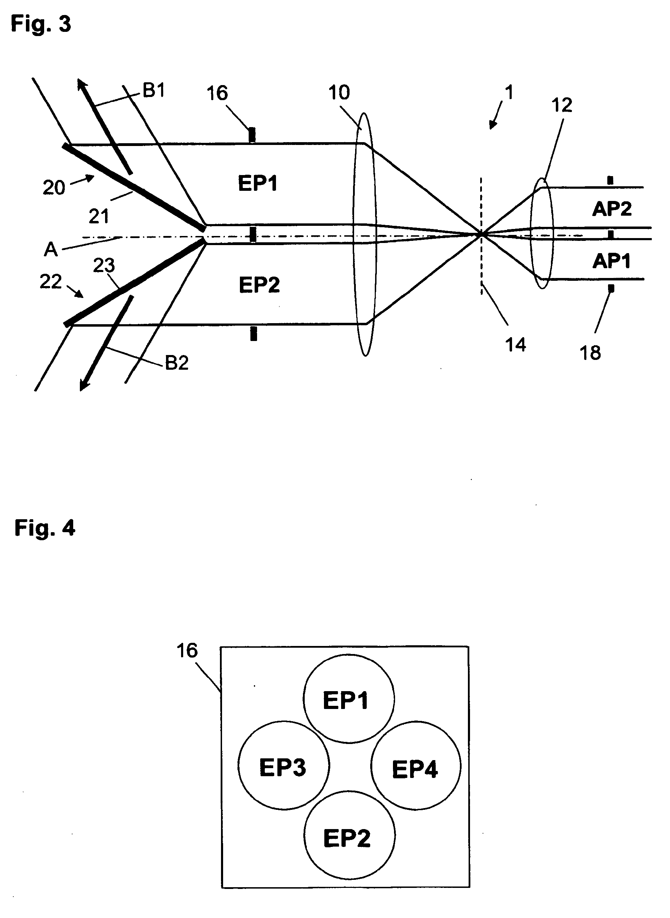

In Fig. 3 ist der Strahlengang einer anderen optischen Anordnung dargestellt. Diese optische Anordnung ist im Bereich der Eintrittsapertur mit einer Blende 16 versehen, die, wie in Fig. 4 dargestellt ist, vier Eintrittspupillen EP1, EP2, EP3 und EP4 aufweist. Statt im Bereich der Eintrittsapertur kann die Pupillenblende auch im Bereich der Austrittsapertur vorgesehen sein, wie in Fig. 3 durch die Blende 18 dargestellt ist, wobei die in Fig. 3 sichtbaren Austrittspupillen AP1und AP2 den Eintrittspupillen EP1 und EP2 der im Bereich der Eintrittsapertur vorgesehenen Pupillenblende 16 entsprechen.

Jeder der Pupillen EP1 bis EP4 der optischen Anordnung ist eine Strahlenumlenkvorrichtung zugeordnet, von der in der Strahlengangdarstellung der Fig. 3 nur die obere Strahlenumlenkvorrichtung 20 und die untere Strahlenumlenkvorrichtung 22 dargestellt sind. Jede der Strahlenumlenkvorrichtungen 20, 22 weist einen Spiegel 21, 23 auf, mittels welchem der der entsprechenden Pupille EP1, EP2 zugeordnete Strahlengang so umgelenkt wird, dass die entsprechende Blickrichtung B1, B2 in einem Winkel zur optischen Achse A steht. Die Winkel der einzelnen Spiegel 21, 23 und somit der einzelnen Blickrichtungen B1, B2 zur optischen Achse A können unterschiedlich sein. Die in Fig. 3 nicht dargestellten Strahlenumlenkvorrichtungen für die Pupillen EP3 und EP4 sind analog ausgebildet

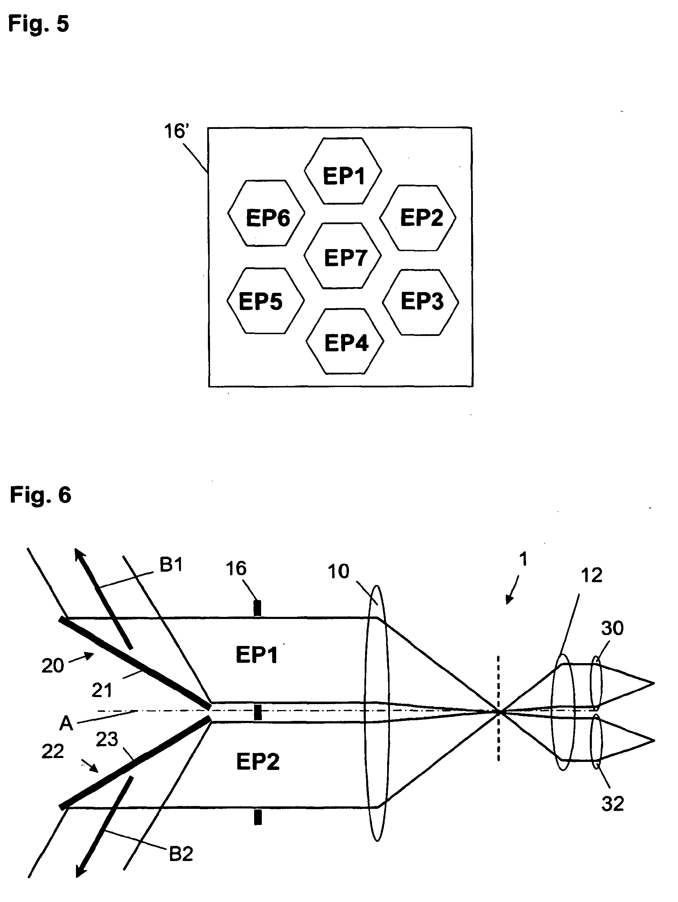

Die optische Anordnung ist nicht auf die in Fig. 4 dargestellte Pupillenblende 16 mit vier runden Pupillen EP1 bis EP4 beschränkt. Die dadurch gebildete Mehrfach-Eintrittspupille kann in Anzahl, Form und Anordnung der Pupillen beliebig gestaltet sein. Ein weiteres Beispiel für eine derartige Mehrfach-Eintrittspupille ist in Fig. 5 dargestellt, bei der die Pupillenblende 16' mit sieben jeweils im Querschnitt sechseckigen Pupillen dargestellt ist, wobei sechs der Pupillen EP1 bis EP6 gleichmäßig um die zentral angeordnete Pupille EP7 herum angeordnet sind.

Die Weiterverarbeitung der Strahlung am Ausgang der optischen Anordnung, also hinter der Austrittsapertur, ist wie in Fig. 6 dargestellt. Erfindungsgemäß kann der Abbildungsoptik 1 im Bereich der Austrittsapertur nachgeordnet eine der Anzahl der Pupillen entsprechende Anzahl von weiteren Abbildungsoptiken 30, 32 vorgesehen sein. Dabei ist jede der weiteren Abbildungsoptiken 30, 32 einer der Pupillen, EP1, EP2 zugeordnet. Diese weiteren Abbildungsoptiken 30, 32 bewirken, dass jede einzelne Pupille separat abgegriffen und beispielsweise auf einem zugeordneten Detektor abgebildet werden kann. Dabei können die einzelnen weiteren Abbildungsoptiken separat voneinander fokussierbar sein. Die in Fig. 6 nicht gezeigten weiteren Abbildungsoptiken, die den Pupillen EP3 und EP4 zugeordnet sind, sind analog ausgebildet. Die weiteren Abbildungsoptiken müssen nicht notwendigerweise der Abbildungsoptik 1 nachgeordnet sein, sondern können alternativ auch in die Abbildungsoptik 1 integriert sein.

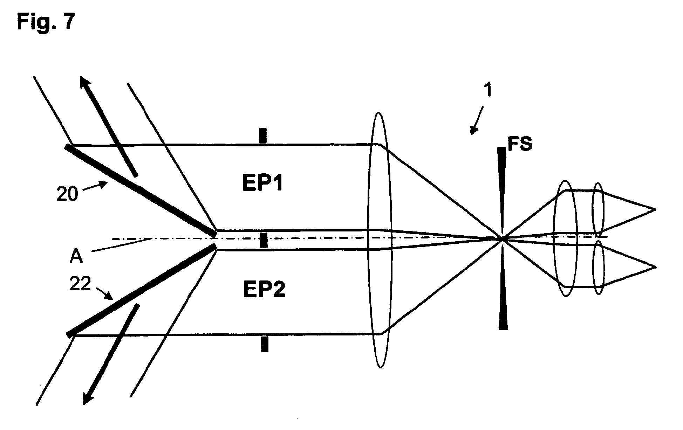

Bei der erfindungsgemäßen optischen Anordnung werden somit mehrere Eintrittspupillen, die unterschiedliche Blickrichtungen aufweisen, von der einzigen Abbildungsoptik 1 erfasst. Hierdurch ist ein sehr kompakter Aufbau einer optischen Anordnung zur Abbildung von in unterschiedlichen Blickrichtungen befindlichen Objekten möglich. Ein weiterer Vorteil besteht darin, dass in der erfindungsgemäßen Anordnung nicht-abbildende optische Elemente nur einmal, nämlich in der einzigen Abbildungsoptik 1, vorgesehen zu werden brauchen. Ein Beispiel dafür ist in Fig. 7 dargestellt, in der die optische Anordnung der aus Fig. 6 entspricht, und wobei in der Zwischenbildebene eine Feldblende FS angeordnet ist. Mittels dieser Feldblende kann auf einfache zentrale Weise Streulicht und Hintergrundlicht (z.B. thermische Hintergrundstrahlung bei Infrarotinstrumenten) ausgeblendet werden. Wenn außerdem, wie dies in den beschriebenen Beispielen der Fall ist, die Sichtfelder der einzelnen Eintrittspupillen beziehungsweise Blickrichtungen gleich groß oder ähnlich groß sind, dann kann mit der einzigen Feldblende FS effizient das Feld aller Eintrittspupillen beziehungsweise Blickrichtungen ausgeblendet werden.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Abbildungsoptik
- 2: Strahlenumlenkvorrichtung
- 10: abbildendes Element
- 12: abbildendes Element
- 14: Zwischenbildebene
- 16: Blende in der Entrittspupille
- 16': Blende in der Entrittspupille
- 18: Blende in der Austrittspupille
- 20: obere Strahlenumlenkvorrichtung
- 21: Spiegel
- 22: untere Strahlenumlenkvorrichtung
- 23: Spiegel
- 30: Abbildungsoptik
- 32: Abbildungsoptik

- A: Achse
- B: Blickrichtung
- AP: Austrittspupille
- EP: Eintrittspupille
- FS: Feldblende

## Patentansprüche

1. Optische Anordnung zur Abbildung von in unterschiedlichen Blickrichtungen (B; B1, B2) befindlichen Objekten, mit
- einer Abbildungsoptik (1), die entlang einer optischen Achse (A) angeordnete abbildende Elemente (10, 12) aufweist, mit einer Eintrittsapertur und einer Austrittsapertur;
- einer im Bereich der Eintrittsapertur und/oder der Austrittsapertur angeordneten Mehrfach-Pupillenblende (16; 18; 16') und
- zumindest einer vor der Eintrittsapertur angeordneten Strahlenumlenkvorrichtung (20, 22), die jeweils einer der von der Mehrfach-Pupillenblende (16; 18; 16') gebildeten Pupillen (EP1, EP2, EP3, EP4, ...) zugeordnet ist,
wobei die abbildenden Elemente der einen Abbildungsoptik (1) die Strahlengänge aller Pupillen (EP1, EP2, EP3, EP4) erfassen.
**dadurch gekennzeichnet,**
- **dass** hinter der Austrittsapertur zumindest eine weitere Abbildungsoptik (30, 32) vorgesehen ist, die einer der von der Mehrfach-Pupillenblende (16; 18; 16') gebildeten Pupillen (EP1, EP2, EP3, EP4, ...) zugeordnet ist.

2. Optische Anordnung nach Anspruch 1
**dadurch gekennzeichnet,**
**dass** jeder der von der Mehrfach-Pupillenblende (16; 18; 16') gebildeten Pupillen (EP1, EP2, EP3, EP4, ...) eine Strahlenumlenkvorrichtung (20, 22) zugeordnet ist.

3. Optische Anordnung nach Anspruch 1 oder 2,
**dadurch gekennzeichnet,**
**dass** die jeweilige Strahlenumlenkvorrichtung (20, 22) zumindest einen Spiegel (21, 23) aufweist.

4. Optische Anordnung nach einem der vorhergehenden Ansprüche,
**dadurch gekennzeichnet,**
**dass** eine der Anzahl der Pupillen entsprechende Anzahl von weiteren Abbildungsoptiken (30, 32) vorgesehen ist, wobei jede weitere Abbildungsoptik (30, 32) einer der Pupillen (EP1, EP2, EP3, EP4, ...) zugeordnet ist.

5. Optische Anordnung nach Anspruch 4,
**dadurch gekennzeichnet,**
**dass** jeder Pupille (EP1, EP2, EP3, EP4, ...) ein Sensor zugeordnet ist, auf dem die Pupille (EP1, EP2, EP3, EP4, ...) abgebildet wird.

6. Optische Anordnung nach einem der Ansprüche 4 oder 5,
**dadurch gekennzeichnet,**
**dass** die weiteren Abbildungsoptiken (30, 32) derart ausgestaltet sind, dass die von der Mehrfach-Pupillenblende (16; 18; 16') erzeugten Bilder, vorzugsweise separat voneinander, fokussierbar sind.

7. Optische Anordnung nach einem der vorhergehenden Ansprüche,
**dadurch gekennzeichnet,**
**dass** in der Zwischenbildebene (14) der Abbildungsoptik (1) eine Feldblende (FS) vorgesehen ist.

## Claims

1. Optical arrangement for imaging objects located in different viewing directions (B; B1, B2), having
- an imaging optical unit (1), having imaging elements (10, 12) arranged along an optical axis (A), with an entrance aperture and an exit aperture;
- a multiple pupil stop (16; 18; 16') arranged in the region of the entrance aperture and/or of the exit aperture, and
- at least one beam deflection apparatus (20, 22) arranged upstream of the entrance aperture, which beam deflection apparatus is assigned in each case to one of the pupils (EP1, EP2, EP3, EP4,...) formed by the multiple pupil stop (16; 18; 16'),
wherein the imaging elements of the one imaging optical unit (1) capture the beam paths of all pupils (EP1, EP2, EP3, EP4),
**characterized in that**
- at least one further imaging optical unit (30, 32) is provided downstream of the exit aperture, which imaging optical unit (30, 32) is assigned to one of the pupils (EP1, EP2, EP3, EP4,...) formed by the multiple pupil stop (16; 18; 16').

2. Optical arrangement according to Claim 1, **characterized in that** each of the pupils (EP1, EP2, EP3, EP4,...) formed by the multiple pupil stop (16; 18; 16') is assigned a beam deflection apparatus (20, 22).

3. Optical arrangement according to Claim 1 or 2, **characterized in that** the respective beam deflection apparatus (20, 22) has at least one mirror (21, 23).

4. Optical arrangement according to one of the preceding claims, **characterized in that** a number of further imaging optical units (30, 32) is provided that corresponds to the number of pupils, with each further imaging optical unit (30, 32) being assigned to one of the pupils (EP1, EP2, EP3, EP4,...).

5. Optical arrangement according to Claim 4, **characterized in that** each pupil (EP1, EP2, EP3, EP4,...) is assigned a sensor on which the pupil(EP1, EP2, EP3, EP4,...) is imaged.

6. Optical arrangement according to either of Claims 4 and 5, **characterized in that** the further imaging optical units (30, 32) are configured such that the images which are produced by the multiple pupil stop (16; 18; 16') are focusable, preferably separately from one another.

7. Optical arrangement according to one of the preceding claims, **characterized in that** a field stop (FS) is provided in the intermediate image plane (14) of the imaging optical unit (1).

## Revendications

1. Dispositif optique destiné à former des images d'objets situés dans différentes directions de regard (B ; B1, B2), comprenant
- une optique de formation d'image (1) qui comprend des éléments de formation d'image (10, 12) disposés le long d'un axe optique (A) et comporte une ouverture d'entrée et une ouverture de sortie ;
- un diaphragme à pupilles multiples (16 ; 18 ; 16') disposé dans la zone de l'ouverture d'entrée et/ou de l'ouverture de sortie, et
- au moins un dispositif de déviation de faisceau (20, 22) disposé à l'avant de l'ouverture d'entrée, lequel dispositif est respectivement associé à l'une des pupilles (EP1, EP2, EP3, EP4, ...) formées par le diaphragme à pupilles multiples (16 ; 18 ; 16'),
dans lequel les éléments de formation d'image d'une optique de formation d'image (1) englobent les chemins de faisceau de toutes les pupilles (EP1, EP2, EP3, EP4, ...),
**caractérisé en ce que**
- à l'arrière de l'ouverture de sortie, il est prévu au moins une autre optique de formation d'image (30, 32) qui est associée à l'une des pupilles (EP1, EP2, EP3, EP4, ...) formées par le diaphragme à pupilles multiples (16 ; 18 ; 16').

2. Dispositif optique selon la revendication 1, **caractérisé en ce qu'**à chacune des pupilles (EP1, EP2, EP3, EP4, ...) formées par le diaphragme à pupilles multiples (16 ; 18 ; 16') est associé un dispositif de déviation de faisceau (20, 22).

3. Dispositif optique selon la revendication 1 ou 2, **caractérisé en ce que** chaque dispositif de déviation de faisceau (20, 22) comprend au moins un miroir (21, 23).

4. Dispositif optique selon l'une quelconque des revendications précédentes, **caractérisé en ce qu'**il est prévu un nombre d'optiques de formation d'image supplémentaires (30, 32) qui correspond au nombre des pupilles, chaque optique de formation d'image supplémentaire (30, 32) étant associée à l'une des pupilles (EP1, EP2, EP3, EP4, ...).

5. Dispositif optique selon la revendication 4, **caractérisé en ce qu'**à chaque pupille (EP1, EP2, EP3, EP4, ...) est associé un capteur sur lequel est formée l'image de la pupille (EP1, EP2, EP3, EP4, ...).

6. Dispositif optique selon l'une quelconque des revendications 4 ou 5, **caractérisé en ce que** les optiques de formation d'image supplémentaires (30, 32) sont conçues de manière à ce que les images générées par le diaphragme à pupilles multiples (16 ; 18 ; 16') puissent de préférence être focalisées séparément les unes des autres.

7. Dispositif optique selon l'une quelconque des revendications précédentes, **caractérisé en ce qu'**un diaphragme de champ (FS) est prévu dans le plan image intermédiaire (14) de l'optique de formation d'image (1).
